# EUROPEAN PATENT SPECIFICATION

(11) **EP 2 708 285 B1**
(45) Date of publication and mention of the grant of the patent: **19.08.2015**
(21) Application number: 13162607.9
(22) Date of filing: 05.04.2013
(51) Int. Cl.: B05B 9/08, F16K 15/02, B65D 83/20, B65D 83/14

(54) **A junction valve of a foam gun**
Verbindungsventil einer Schaumstoffpistole
Soupape de jonction de canon à mousse

(30) Priority: 17.09.2012 CN 201220471041 U
(43) Date of publication of application: 19.03.2014
(73) Proprietor: Lanbo Tools Co Ltd., Shanghai (CN)
(72) Inventor: Dai, Junhuan, Shangai (CN)
(74) Representative: Loyer & Abello

(56) References cited:
- CN-U- 201 552 090
- CN-Y- 201 371 098
- DE-A1- 19 503 495
- DE-A1- 19 640 251
- FR-A1- 2 793 864
- US-A1- 2011 209 780

## Description

### TECHNICAL FIELD

This creation relates to a junction valve, and in particular it relates to a junction valve of foam gun.

### BACKGROUND

As we all know, the foam gun is a tool for caulking and sealing windows and doors with the foaming agent. The injection port of foam tank is connected to the connector of the foam gun, thus the foaming agent in the foam tank is able to enter into the chamber of the foam gun. Through pressing down the trigger of the foam gun, the foaming agent is sprayed from the chamber of the foam gun for the purpose of installation, caulking, heat preservation, insulation or bonding etc.

The foaming agent in the chamber and the channel of the foam gun generally has its own air pressure or is in the form of high pressure liquid. The foaming agent with its own air pressure or in the form of high pressure liquid will impact the junction valve and make the pressure of the foaming agent entering in the foam gun uneven at the same time when the foam tank connected with the foam gun. It will also damage the inner of the junction valve and make the injection of the foam gun unstable. Tightness of the junction valve is also important in operation. As the valve plug moves back and forth constantly, the long-term friction between the valve plug and the valve body can easily cause the looseness between the valve plug and the valve body, and further resulting a gap, which will cause the solidification of the foaming agent in the gun and cause the clogging in the entire channel. Furthermore, there will be a danger of combustion or explosion.

A junction valve corresponding to the preamble of claim 1 is shown in CN 2015 52090 U.

### SUMMARY OF THE CREATION

The creation discloses a junction valve of foam gun to solve the following problems, the impact against the junction valve and the uneven pressure of the foaming agent entering the foam gun, caused by the foaming agent's air pressure or the form of high pressure liquid when the foam tank connects with the foam gun. And it can also solve the problem about the gap caused by the looseness between the valve plug and the valve body due to the prolonged friction between the valve plug and the valve body when the valve plug constantly moves back and forth in operation.

In order to achieve the above purpose a junction valve of a foam gun is proposed in accordance with claim 1.

Further advantageous embodiments of the invention are set out in the dependent claims.

The creation of a foam gun junction valve possesses the following effects through using the above technical solution:
1. The junction valve of foam gun is opened directly by the valve plug of the foaming agent effectively; it effectively makes the out-gassing force of the foaming agent entering the valve uniform; it avoids the uneven out-gassing force of the foaming agent after opening the valve plug ball of the past foam gun;
2. It adds the sealing member to improve the tightness inside of the valve body and the tightness between the valve body and the connector;
3. The thread connection between the valve body and the connector is conducive to the replacement of the valve body.

### BRIEF DESCRIPTION OF DRAWINGS

The detailed description of non-limiting embodiment made with reference to the following drawings; the technical features, objects and advantages of the creation will become more evident.
FIG. 1 is a sectional structural schematic diagram of the junction valve of the foam gun in the creation;
FIG. 2 is a sectional structural schematic diagram of the junction valve body of the foam gun in the creation;
FIG. 3 is a separated sectional structural schematic diagram of the junction valve body of the foam gun in the creation;

The list of the reference numbers in this disclosure:
connector 1,
valve body 2,
outer (valve) body 21,
annular projection 211,
inner (valve) body 22,
annular groove 221,
countersink 3,
valve plug 4,
spring 5,
spring fixing base 6,
valve plug retaining ring 7,
annular bump 8,
first seal member 9,
sleeve 10,
side wall 11,
rectangular through-hole 12,
guide pillar 13,
second seal member 14,
through-holes 15,
fixing ring 16.

### DETAILED DESCRIPTION

In order to make the technical means, creating features, the purpose and the achieved effectiveness easy to understand, the creation will be further illustrated combined with specific icon.

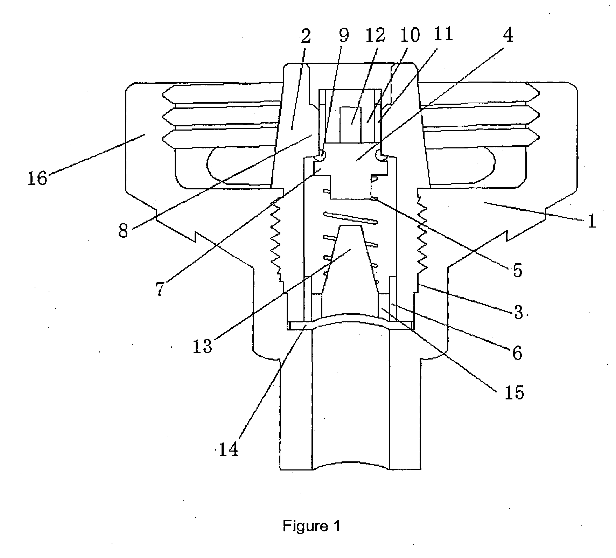

Referring to FIG. 1, a junction valve of foam gun includes the connector 1 and the valve body 2, and the connector 1 includes a countersink 3 inside; the lower part of the valve body 2 is arranged in the countersink 3, wherein the valve body 2 includes a valve plug 4, a spring 5 and a spring fixing base 6; the valve plug 4 is located at the upper part of the valve body 2; the spring fixing base 6 is located at the lower part of the valve body 2; the spring 5 is arranged between the valve plug 4 and the spring fixing base 6; the spring 5 plays as the elastic support between the valve body 4 and the spring fixing base 6, which makes the valve plug 4 reset with elasticity when it was depressed.

The middle part of the valve plug 4 has a valve plug retaining ring 7; the upper part inside of the valve body 2 includes an annular bump 8; the valve plug retaining ring 7 has a first sealing member 9 on the position where the upper side of the valve plug retaining ring contacts with the lower part of the annular bump 8; furthermore, the first sealing member 9 is an annular rubber band; in specific embodiment of the present creation, the first sealing member 9 prevents the foaming agent overflowing and solidifying from the gap between the valve plug 4 and the valve body 2. which will block the entire channel; the end surface of the valve plug 4 facing the part of the upper half of the valve body 2 opening is equipped with the sleeve 10 vertically; on the side wall 11 of the sleeve 10, several the rectangular through-holes 12 are uniformly surrounded; when the nozzle of the foam tank connects with the valve body 2, the foaming agent in the foam tank is punched to the valve plug 4 from the nozzle; the valve plug 4 was compressed closing to the spring fixing base 6 until resisted by the spring fixing base 6; the foaming agent evenly enters the valve body 2 from the rectangular through-holes 12 in the side wall 11 after impacting the valve plug 4.

On the end surface of the spring fixing base 6 which faces the valve plug 4, a spring base guide pillar 13 is disposed vertically; the spring 5 is disposed on the guide pillar 13; the guide pillar 13 plays a role in guiding for the spring 5 and prevents the spring 5 being pressed dislocation; further, the distance from the top surface of the guide pillar 13 to the lower side of the annular bump 8 is the same as the distance from the upper side of the valve plug retainer ring 7 to the top surface of the side wall 11.

A second sealing member 14 is disposed between the lower end surface of the valve body 2 and the surface of the countersink 3 on the connector 1; in the specific embodiment of the present creation, the second sealing member 14 is an annular gasket or a spring gasket.

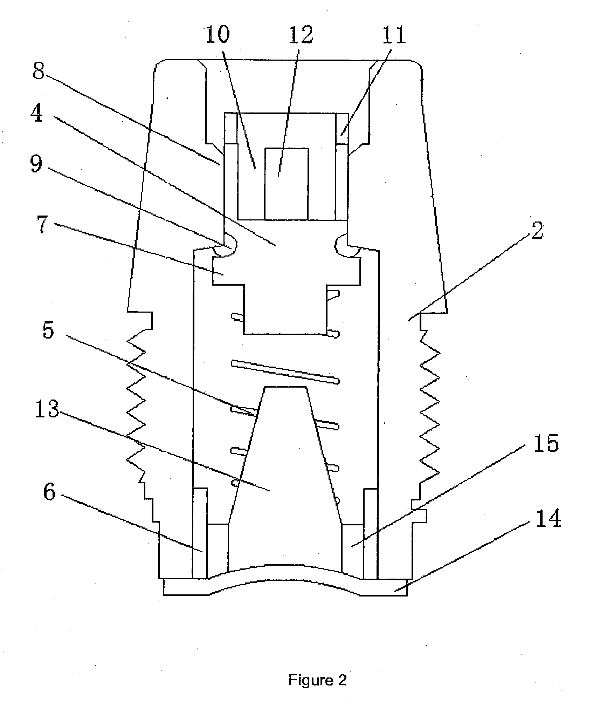

Referring to FIG. 2, in the specific embodiment of the present creation, the second sealing member 14 is placed on the bottom surface of the countersink 3 of the connector 1 at first; the valve body 2 is screwed into the internal thread of the connector 1 via the external thread; the spring fixing base 6 within the valve body 2 is close to the second sealing member 14 due to the elastic force of the spring 5.

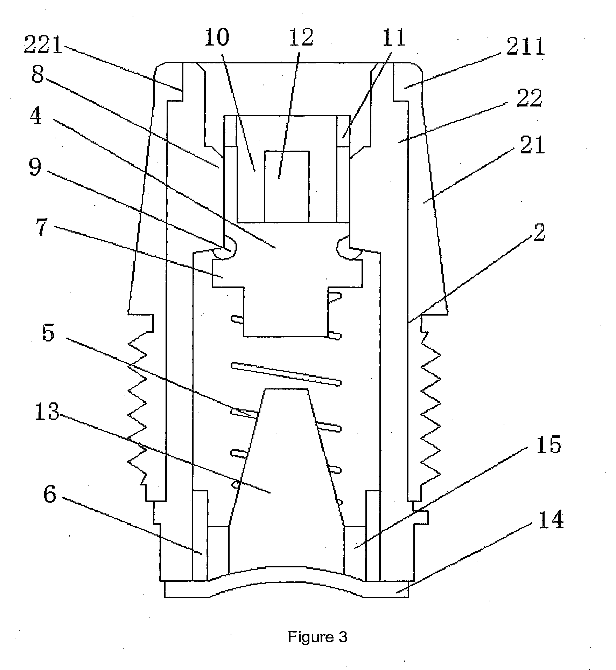

Referring to FIG. 3, in another specific embodiment of the present creation, the valve body 2 includes a outer body 21 and an inner body 22; the outer body 21 is sleeved on the outside of the inner body 22; the annular groove 221 is formed outside of the surface of the upper half of the inner body 22; the annular projection 221 is formed inside of the surface of the upper half of the outer body 21; the annular projection 211 matches with the annular groove 221; further, the second sealing member 14 is placed on the bottom surface of the countersink 3 of the connector 1 in assembly, and then the inner body 22 is inserted into the countersink 3 of the connector 1; the spring fixing base 6 within the inner body 22 is close to the second sealing member 14 due to the elastic force of the spring 5; finally, the outer body 21 is disposed on the inner body 22 and screwed into the connector 1 to fixing the inner body 22, which enhances the interchangeability among the parts.

In the specific embodiment of the present creation, the connector 1 is provided with a fixing ring 16 located at one end of the valve body 2; the fixing ring 16 is formed with internal thread; further, it is convenient when the head of the foam tank is screwed into the fixing ring 16.

Referring to FIG. 2, in the present creation specific embodiment, the external threads of the valve body 2 are formed outside of the lower half of the valve body 2; the internal threads of the connector 1 are formed inside of the connector 1; the external threads of the valve body 2 match with the internal thread of the connector 1.

In the specific embodiment of the present creation, several through-holes 15 are arranged evenly surrounding the guide pillar on the underside of the spring fixing base 6; further, the foaming agent which pass the valve body 2 enters into the chamber of the foam gun through a uniform distribution manner of the through-holes 15.

In the specific embodiment of the present creation, the guide pillar 13 is tapered, which makes the spring 5 sleeve set on the guide pillar 13 more easily.

Referring to FIG. 1, in the specific embodiment of the present creation, the head of the foam tank is screwed into the fixing ring 16 which connected with the connector 1 to fix the foam tank at first; the nozzle of the foam tank is inserted into the valve body 2 and the foaming agent gushes from the foam tank to impact the valve plug 4 at the meantime; the valve plug 4 was compressed closing to the spring fixing base 6 until resisted by the guide pillar 13 of the spring fixing base 6; the foaming agent enters into the valve body 2 from the rectangular through-holes 12 of the side wall 11, and then it pass the through-holes 15 of the spring fixing base 6 to enter into the chamber of the foam gun through a uniform distribution manner; when the foam tank is screwed out after using, the valve plug 4 will be reset by the spring 5; the first sealing member 9 prevented the foaming agent overflowing from the gap between the valve plug 4 and the valve body 2.

In summary, the creation of the junction valve of foam gun makes the foaming agent in the foam gun stress evenly through the effective design of the valve plug; it increases sealing member such that to improve the tightness inside of the valve body and the tightness between the valve body and the connector; the thread connection between the valve body and the connector is conducive to the replacement of the valve body.

The above description is the specific embodiments of the creation. It should be understood that the creation is not limited to the above specific embodiment, wherein the deficiencies detailed description of the equipment and structures should be understood to be implemented by skilled in the ordinary manner; persons skilled in the art can make various modifications or changes within the scope of the claims, which does not affect the substance of the creation.

## Claims

1. A junction valve of a foam gun, including a connector (1) and a valve body (2), the connector (1) including a countersink (3) and the lower part of the valve body (2) being arranged in the countersink (3); the valve body (2) including a valve plug (4), a spring (5) and a spring fixing base (6) the upper part inside of the valve body (2) includes an annular bump (8); the valve plug (4) is located at the upper part of the valve body (2); the spring fixing base (6) is located at the lower part of the valve body (2); the spring (5) is arranged between the valve plug (4) and the spring fixing base (6); a spring base guide pillar (13) being disposed vertically on the end surface of the spring fixing base (6) which faces the valve plug (4); the spring being set on the guide pillar (13);
a second sealing member (14) being disposed between the lower end surface of the valve body (2) and the surface of the connector countersink (3); **characterized in that** the middle part of the valve plug (4) has a valve plug retaining ring (7); the valve plug retaining ring (7) having a first sealing member (9) on the position where the upper side of the retaining ring (7) contacts with the lower part of the annular bump (8); the end surface of the valve plug (4) facing the part of the second half of the valve body (2) opening being equipped with a sleeve (10) vertically several rectangular through-holes (12) being set uniformly surrounding in the side wall (11) of the sleeve (10).

2. The junction valve of foam gun according to Claim 1, which is further **characterized in that** the valve body (2) includes an outer body (21) and an inner body (22); the outer body (21) is sleeved on the outside of the inner body (22); an annular groove (221) is disposed outside of the surface of the upper half of the inner body (22); an annular projection (211) is disposed inside of the surface of the upper half of the outer body (21); the annular projection (211) matches with the annular groove (221).

3. The junction valve of foam gun according to Claim 1, which is further **characterized in that** the connector is provided with a fixing ring (16) located at the one end of the valve body; in the fixing ring (16) the internal threads are formed.

4. The junction valve of foam gun according to Claim 1, which is further **characterized in that** the external threads of the valve body (2) are formed outside of the lower half of the valve body (2); the internal threads of the connector are formed inside of the connector (1); the external thread of the valve body (2) match with the internal thread of the connector (1).

5. The junction valve of foam gun according to Claim 1, which is further **characterized in that** there are several through-holes (15) set evenly surrounding the guide pillar (13) on the underside of the spring fixing base (6).

6. The junction valve of foam gun according to Claim 1, which is further **characterized in that** the guide pillar (13) is tapered.

## Patentansprüche

1. Anschlussventil eines Schaumstoffgewehrs, das einen Anschluss (1) und einen Ventilkörper (2) umfasst, wobei der Anschluss (1) eine Versenkung (3) umfasst und der untere Teil des Ventilkörpers (2) in der Versenkung (3) angeordnet ist; wobei der Ventilkörper (2) einen Ventilverschluss (4), eine Feder (5) und eine die Feder befestigende Basis (6) umfasst, der obere Teil innerhalb des Ventilkörpers (2) einen ringförmigen Buckel (8) umfasst; der Ventilverschluss (4) befindet sich am oberen Teil des Ventilkörpers (2); die die Feder befestigende Basis (6) befindet sich am unteren Teil des Ventilkörpers (2); die Feder (5) ist zwischen dem Ventilverschluss (4) und der die Feder befestigenden Basis (6) angeordnet; wobei ein Führungsbolzen (13) mit Federbasis vertikal auf der Endoberfläche der die Feder befestigenden Basis (6) angeordnet ist, die dem Ventilverschluss (4) gegenüberliegt, wobei die Feder auf dem Führungsbolzen (13) aufgesetzt ist;
wobei ein zweites Versiegelungsglied (14) zwischen der unteren Endoberfläche des Ventilkörpers (2) und der Oberfläche der Anschlussvertiefung (3) angeordnet ist;
**dadurch gekennzeichnet, dass** der mittlere Teil des Ventilverschlusses (4) einen den Ventilverschluss festhaltenden Ring (7) hat, wobei der den Ventilverschluss festhaltende Ring (7) ein erstes Versiegelungsglied (9) auf der Position hat, auf der die obere Seite des festhaltenden Rings (7) mit dem unteren Teil des ringförmigen Buckels (8) in Kontakt kommt; wobei die Endoberfläche des Ventilverschlusses (4) gegenüber dem Teil der zweiten Hälfte der Öffnung des Ventilkörpers (2) liegt, die vertikal mit einer Muffe (10) ausgerüstet ist; wobei mehrere rechteckige Durchgangsbohrungen (12) einheitlich umgebend in der Seitenwand (11) der Muffe (10) eingesetzt sind.

2. Anschlussventil eines Schaumgewehrs gemäß Anspruch 1, das weiterhin **dadurch gekennzeichnet ist, dass** der Ventilkörper (2) einen äußeren Körper (1) und einen inneren Körper (22) umfasst; der äußere Körper (21) ist an der Außenseite des inneren Körpers (22) mit einer Muffe versehen; eine ringförmige Rille (221) ist außerhalb der Oberfläche der oberen Hälfte des inneren Körpers (2) angeordnet; eine ringförmige Projektion (211) ist innerhalb der Oberfläche der oberen Hälfte des äußeren Körpers (21) angeordnet; die ringförmige Projektion (221) passt zu der ringförmigen Rille (221).

3. Anschlussventil eines Schaumgewehrs gemäß Anspruch 1, das weiterhin **dadurch gekennzeichnet ist, dass** der Anschluss mit einem Befestigungsring (16) versehen ist, der sich an dem einen Ende des Ventilkörpers befindet; in dem Befestigungsring (16) sind die Innengewinde geformt.

4. Anschlussventil eines Schaumgewehrs gemäß Anspruch 1, das weiterhin **dadurch gekennzeichnet ist, dass** die Außengewinde des Ventilkörpers (2) außerhalb der unteren Hälfte des Ventilkörpers (2) geformt sind; die Innengewinde des Anschlusses sind innerhalb des Anschlusses (1) geformt; das Außengewinde des Ventilkörpers (2) passt zu dem Innengewinde des Anschlusses (1).

5. Anschlussventil eines Schaumgewehrs gemäß Anspruch 1, das weiterhin **dadurch gekennzeichnet ist, dass** es mehrere Durchgangsbohrungen (15) gibt, die gleichmäßig den Führungsbolzen (13) umrundend auf der Unterseite der die Feder befestigenden Basis (6) eingesetzt sind.

6. Anschlussventil eines Schaumgewehrs gemäß Anspruch 1, das weiterhin **dadurch gekennzeichnet ist, dass** der Führungsbolzen (13) kegelförmig ist.

## Revendications

1. Valve de raccord pour un pistolet applicateur de mousse comprenant un connecteur (1) et un corps de valve (2), le connecteur (1) ayant une contredépouille (3), et la partie inférieure du corps de valve (2) étant disposée dans la contredépouille (3) ; le corps de valve (2) comprenant un pointeau de valve (4), un ressort (5) et une base de fixation de ressort (6), la partie supérieure du corps de valve (2) présentant un rétrécissement annulaire (8) ; le pointeau de valve (4) étant placé en partie supérieure du corps de valve (2) ; la base de fixation de ressort (6) étant placée dans la partie inférieure du corps de valve (2) ; le ressort (5) étant placé entre le pointeau de valve (4) et la base de fixation de ressort (6) ;
un doigt de guidage de base de ressort (13) étant placé verticalement sur la surface d'extrémité de la base de fixation de ressort (6) qui fait face au pointeau de valve (4), le ressort (5) étant emmanché sur le doigt de guidage de base de ressort (13) ;
un second joint (14) étant placé entre la surface inférieure du corps de valve (2) et la surface correspondante sur le connecteur (3) ;
**caractérisée en ce que** la partie médiane du pointeau (4) présente une rondelle intégrée (7), la rondelle intégrée (7) ayant un premier joint à gorge (9) dans une position dans laquelle la surface supérieure de la rondelle intégrée (7) est en contact avec la surface inférieure du rétrécissement annulaire (8) ; la partie supérieure du pointeau (4) étant constituée d'un manchon cylindrique vertical (10) pourvu de lumières rectangulaires (12) régulièrement espacées, creusées dans la paroi (11) du manchon vertical (10).

2. Valve de raccord pour un pistolet applicateur de mousse selon la revendication 1, **caractérisée de plus en ce que** le corps de valve (2) est composé d'une partie extérieure (21) et d'une partie intérieure (22); la partie extérieure (21) est manchonnée sur le diamètre extérieur de la partie intérieure (22) ; une gorge annulaire (221) est placée en partie haute de la surface cylindrique extérieure du corps intérieur (22) ; une nervure circulaire (211) est disposée en partie haute du cylindre intérieur de la partie extérieure (21) ; la nervure (211) est conforme à la gorge (221).

3. Valve de raccord pour pistolet applicateur de mousse selon la revendication 1, **caractérisée de plus en ce que** le connecteur est pourvu d'un anneau de fixation (16) situé à l'une des extrémités du corps de valve ; l'anneau (16) étant pourvu d'un taraudage.

4. Valve de raccord pour pistolet applicateur de mousse selon la revendication 1, **caractérisée de plus en ce que** le filetage du corps de valve (2) est formé à l'extérieur de la moitié inférieure du corps de valve ; le taraudage du connecteur est formé à l'intérieur du connecteur (1) ; le filetage du corps de valve (2) correspond au taraudage du connecteur (1).

5. Valve de raccord pour pistolet applicateur de mousse selon la revendication 1, **caractérisée de plus en ce qu'**il y a plusieurs lumières radiales (15) disposée régulièrement sur le pourtour du doigt de guidage (13) sur la partie inférieure de la base de fixation de ressort (6).

6. Valve de raccord pour pistolet applicateur de mousse selon la revendication 1, **caractérisée de plus en ce que** le doigt de guidage (13) a une forme tronconique.
